# EUROPEAN PATENT SPECIFICATION

(11) **EP 4 373 645 B1**
(45) Date of publication and mention of the grant of the patent: **18.06.2025**
(21) Application number: 22751153.2
(22) Date of filing: 12.07.2022
(51) Int. Cl.: B25J 15/02, B25J 15/08, B25B 1/18, B25J 13/08

(54) **PNEUMATIC GRIPPER**
PNEUMATISCHER GREIFER
PINCE PNEUMATIQUE

(30) Priority: 19.07.2021 IT 202100019043
(43) Date of publication of application: 29.05.2024
(73) Proprietor: Camozzi Automation S.p.A., 20134 Milano (IT)
(72) Inventor: ROSSI, Marco, 25126 Brescia (IT); LEVI, Fabio, 25126 Brescia (IT)
(74) Representative: Chimini, Francesco
(86) International application number: PCT/IB2022/056425
(87) International publication number: WO 2023/002302

(56) References cited:
- IT-A1- MI 930 778
- US-A1- 2003 189 349
- US-A1- 2006 065 116
- US-A1- 2019 315 000

## Description

The present invention relates to a pneumatic gripper, in particular for robotic applications.

Grippers suitable to grasp and carry an object are well known. Generally, grippers comprise a gripper body and at least two gripper fingers, also called "jaws" in technical jargon, which are movable with respect to the gripper body between an idle open position and a closed position for grasping an object.

In the case of pneumatic grippers, a pneumatic actuation group operatively coupled to the jaws is housed inside the gripper body to move the jaws between the open and closed positions by means of a pressurized command fluid.

In some embodiments, a proportional control of the force and the position of the jaws is desired. The grippers must be equipped with pressure regulators and sensors, which will result in an increased size and weight. Moreover, current grippers, by their very design, do not allow for the level of accuracy and speed of response required, for example, in robotic applications. Examples of pneumatic grippers of the prior art are disclosed in the following documents US 2003/189349 A1, US 2019/315000 A1, US 2006/065116 A1 and IT MI 930 778 A1.

It is therefore the object of the present invention to propose a pneumatic gripper that may combine small size and low weight with high performance in terms of controlling the grip on a workpiece.

Another object of the invention is to propose a gripper that, while having a small size and low weight, is able to carry out proportional control of pressure, and thus gripping force, as well as position control with a high level of precision and speed.

Said objects are achieved with a pneumatic gripper according to claim 1.

The dependent claims describe preferred or advantageous embodiments of the gripper.

Further features and the advantages of the pneumatic gripper according to the invention shall be readily apparent from the following description of preferred embodiments thereof, provided purely by way of a non-limiting example, with reference to the accompanying figures, wherein:

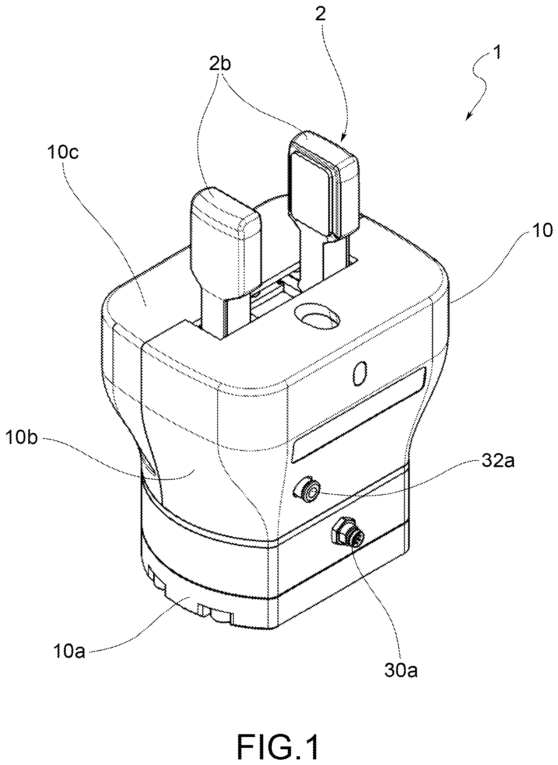

- Figure 1 is a perspective view of a pneumatic gripper;

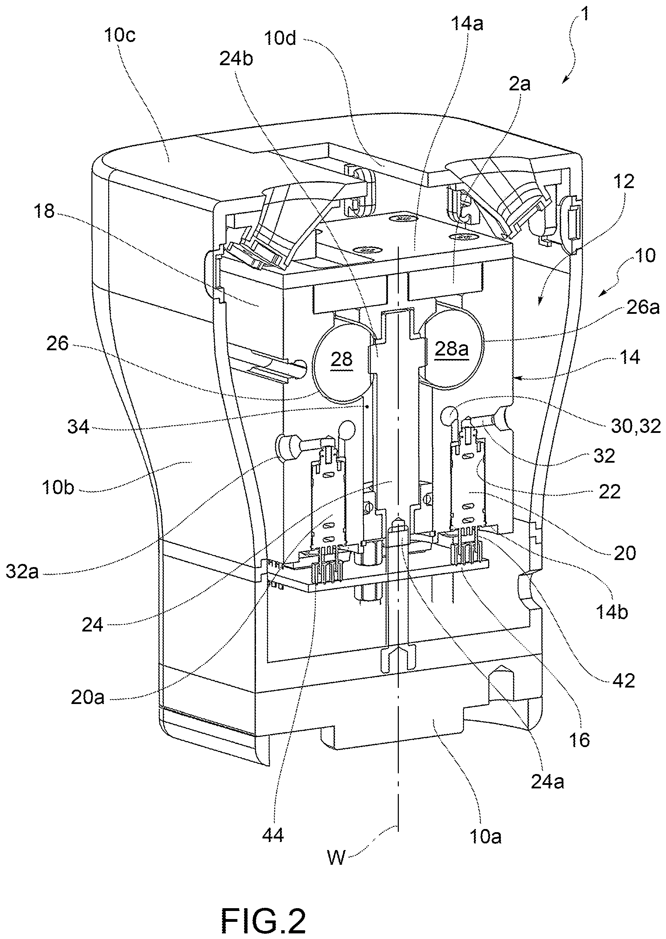

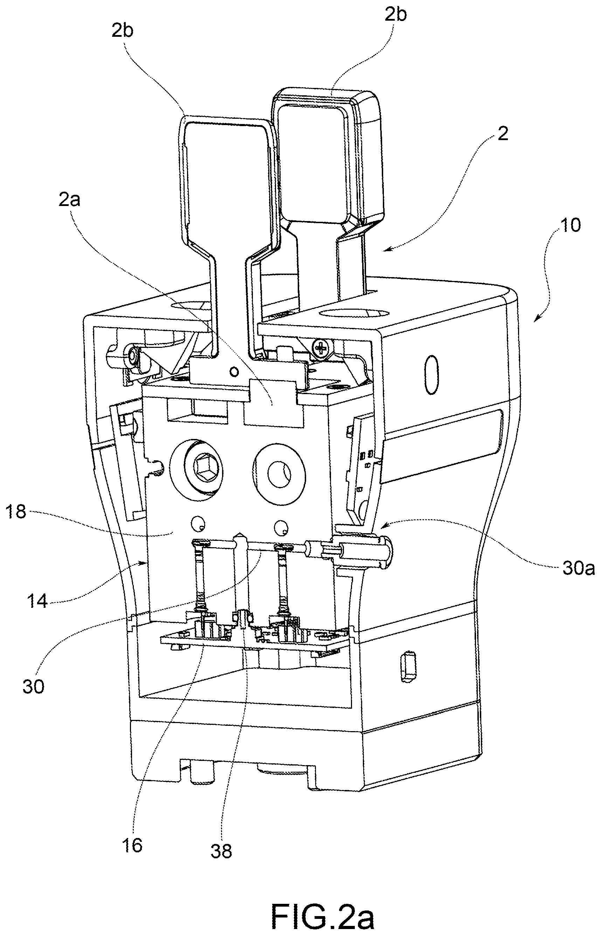

- figure 2 is an axial section of the gripper in figure 1;
- figure 2a is another vertical section of the gripper in figure 1,

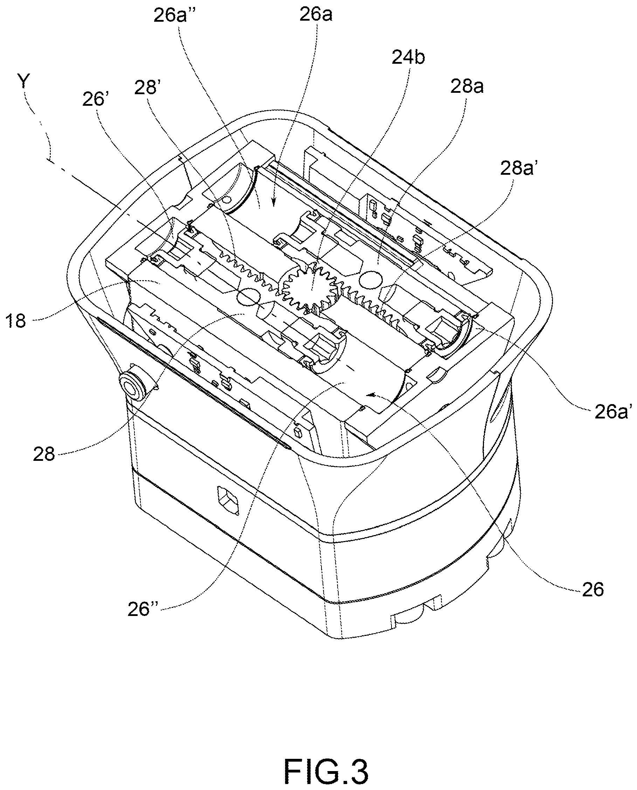

- figure 3 is a cross section of the gripper in figure 1, at the jaw actuation pistons;

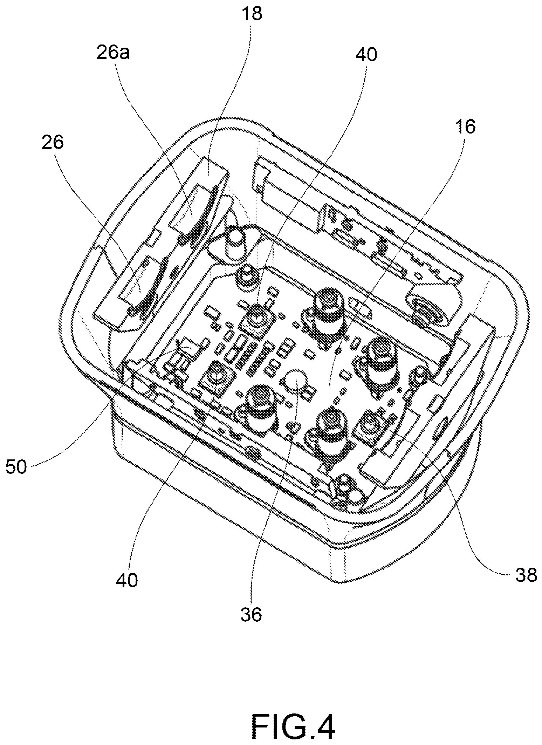

- figure 4 is a perspective view from above of the inside of the gripper, without the internal body of the pneumatic actuation group;

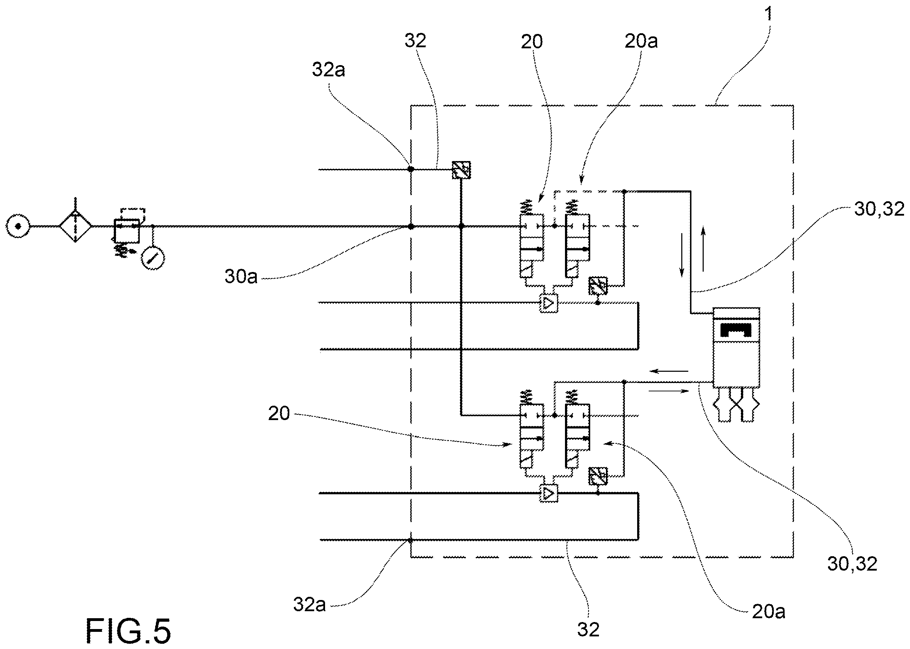

- figure 5 is a pneumatic diagram of the gripper.

In said drawings, a pneumatic gripper according to the invention has been collectively denoted as 1.

In the remainder of this description, the terms "upper" and "lower" and their synonyms will be used for simplicity of exposition and in a non-limiting manner in reference to the gripper in the position illustrated in the drawings, i.e., with the jaws facing upward and the portion connecting to a robot wrist facing downward.

In a general embodiment, the gripper 1 comprises a shell 10 that defines an internal gripper compartment 12. This internal gripper compartment 12 houses a pneumatic actuation group 14 and an electronic command and control board 16 of the pneumatic actuation group 14.

The gripper 1 is equipped with two gripping jaws 2 commanded by the pneumatic actuation group 14 so as to be translatable along a jaw translation axis (X) between a jaw opening position and a jaw closing position.

In the remainder of the description, the term "gripping jaw" 2 will collectively refer to the movable element formed by a plate-shaped component 2a, or slide, suitable for translating along the translation axis X in a respective guide, and a gripping member 2b, or finger, rigidly connected to, or made in one piece with, the plate-shaped component 2a. The gripping members 2b emerge from the shell 10.

For example, the shell 10 comprises a base 10a, side walls 10b extending from the base 10a, and a top wall 10c that closes the internal gripper compartment 12 at the top and in which one or more slits 10d are obtained, which are penetrated by the gripping members 2b of the jaws 2.

The base 10a may be configured to connect to a robot wrist.

The pneumatic actuation group 14 comprises an internal body 18, cartridge solenoid valves 20, 20a housed in respective valve seats 22 obtained in the internal body 18, and a transducer shaft 24.

In one embodiment, the internal body 18 extends between a distal 14a, or upper, end from which the jaws protrude, and a proximal 14b, or lower, end facing the base 10a of the shell.

For example, the electronic command and control board 16 is placed between the proximal 14b, or lower, end of the internal body 18 and the base 10a of the shell 10.

In an intermediate or upper portion of the internal body 18, two pneumatic chambers 26, 26a extending along respective chamber axes (Y) parallel to each other and to the jaw translation axis (X) are obtained.

A jaw actuation piston 28, 28a is slidingly housed in each pneumatic chamber 26, 26a. Each jaw 2 is rigidly connected to a respective jaw actuation piston 28, 28a.

The two pistons 28, 28a are simultaneously controllable to translate along the chamber axes (Y) in opposite directions to each other, so that the respective jaws 2 are movable towards each other (closing jaws), for gripping a workpiece, or away from each other (opening jaws), for releasing the workpiece.

Each pneumatic chamber 26, 26a is then divided by the respective piston into a closing jaw chamber 26', 26a' (i.e., pressurizable to move the pistons together) and an opening jaw chamber 26", 26a" (i.e., pressurizable to move the pistons apart).

The pneumatic supply 30 and discharge 32 passages are obtained in the internal body 18. The supply passages 30 put an inlet port 30a, provided with a fitting for connecting to a supply tube, in fluid communication with the valve seats 22, and said valve seats with the jaw closing and opening chambers. Pneumatic discharge passages 32 put the closing and opening jaw chambers in communication with the valve seats 22 and said valve seats with at least one discharge port 32 to discharge air from the chambers, e.g., into the environment.

In one embodiment, the gripper is equipped with four identical cartridge solenoid valves 20, 20a of the 2/2 type (two-way, two-position). Each solenoid valve 20, 20a may then switch between an electrically actuated position, in which it allows the air to flow into or out of the respective chambers, and an idle position, in which it prevents the air from flowing. Therefore, for each of the two pairs of closing jaw 26', 26a' and opening jaw 26", 26a" chambers, two solenoid valves 20, 20a are used: a supply solenoid valve 20 that controls the passage of air from the inlet port 30a to the respective chambers of the chamber pair; a discharge solenoid valve 20a that controls the passage of air from the respective chambers of the chamber pair to the discharge port 32a.

It should be noted that according to the usual definition of a cartridge valve, a valve seat 22 means not only a cavity that houses the valve, but a cavity that, in cooperation with the cartridge solenoid valve body, forms the supply and discharge chambers in fluid communication with the pneumatic chambers.

In particular, in one embodiment, the valve seats 22 are obtained under, and as close as possible to, the pneumatic chambers 26, 26a, so as to minimize dead volumes and pressure drops and, consequently, have a high response speed to any force and/or pressure change requests.

In one embodiment illustrated in the drawings, the cartridge solenoid valves 20; 20a are arranged to extend predominantly in a vertical direction, i.e., along a valve axis perpendicular to the command and control board 16. Thus, the passages connecting the upper end of each valve seat 22 to the respective pneumatic chamber have a reduced extension.

The electronic command and control board 16 of the pneumatic actuation group 14 is provided with electrical connection means, which are suitable for obtaining an electrical connection with the cartridge solenoid valves 20.

Moreover, on the electronic command and control board 16, a position sensor 36 is mounted, which is operatively coupled to the transducer shaft 24.

Additionally, on the electronic command and control board 16, chamber pressure sensors 40 are mounted, which are suitable for measuring the air pressure in the closing jaw 26', 26a' and opening jaw 26", 26a" chambers.

In one embodiment, on the command and control board 16, a supply pressure sensor 38 is also mounted, which is in fluid communication with the inlet port 30a to measure the pressure of the air entering the gripper.

In one embodiment, the valve seats 22 are open at the bottom toward the electronic command and control board 16. Each cartridge solenoid valve 20 is equipped with electrical solenoid valve contacts 42, e.g., of the male type, e.g., in the form of pins, extending from the bottom parallel to the shaft axis W, protruding from the internal body 18.

The electronic command and control board 16 supports electrical board connectors 44, e.g., of the female type, which couple electrically with the electrical solenoid valve contacts 42 without requiring connecting cables between the electronic command and control board and the solenoid valves.

The four cartridge solenoid valves 20, 20a, the pressure sensors 38, 40, and the position sensor 36 are operatively connected to a processing unit 50 mounted on the command and control board 16.

In a preferred embodiment, four cartridge solenoid valves 20, 20a are employed so as to implement proportional pressure regulation and consequently, by equipping the jaws with sensor means which are suitable for providing the processing unit 50 with signals indicative of the force exerted by the jaws on the object, as well as of the gripping force. An example of a method for controlling the gripping force of a gripper is described in WO2021084493A1.

This technical solution is particularly advantageous in that it avoids having an actual pressure regulator, which is usually very bulky, and which in the state of the art is not integrated within said device, but rather is positioned externally, for example in the control panel of the robot being used.

For this purpose, the processing unit 50 commands the solenoid valves 20, 20a so as to reach the target pressures, the pressures of the opening and closing chambers being known due to the chamber pressure sensors 40.

In the embodiment that envisages the use of ON/OFF-type cartridge solenoid valves, the solenoid valves are commanded by the processing unit 50 with a PWM modulation.

The transducer shaft 24 extends with the possibility of axial rotation along a shaft axis (W) perpendicular to the chamber axes (Y) in a shaft seat 34 formed in the internal body 18. The transducer shaft 24 is operatively connected to the jaw actuation pistons 28, 28a so as to be actuated to rotate by the translation of the jaw actuation pistons. Therefore, the transducer shaft 24 converts the translatory motion of the pistons into a rotary motion that may be measured, for example, with an encoder.

Note that although the transducer shaft 24 is housed within the pneumatic actuation group 14 so that it is in contact with the actuation pistons, it has no active function in the movement chain of the jaws, but only a passive function of detecting the position of the pistons, and thus the jaws.

In one embodiment, the electronic command and control board 16 is supported by the internal body 18. For example, the electronic command and control board 16 is connected by threaded tie rods 46 to the internal body 18.

Returning now to the transducer shaft 24, in one embodiment the transducer shaft 24 supports, at its lower end facing the command and control board, a magnetic element 24a, such as a magnet.

In this embodiment, the position sensor 36 is an encoder magnetically coupled to the magnetic element. Therefore, it is possible to measure the rotation of the transducer shaft 24 and thus the translation of the actuation pistons without contact between the shaft and the position sensor.

In one embodiment, each actuation piston 28; 28a is equipped on one of its sides facing the other piston with a rack portion 28', 28a'. The racks are coupled to a central synchronization pinion 24b supported by the transducer shaft 24.

The central synchronization pinion 24b ensures the perfect synchronization between the two movements in opposite directions of the actuation pistons.

Moreover, in addition to carrying out the function of piston synchronization, the center pinion 24b also carries out a self-centering function, i.e., it ensures that the jaws close exactly at the center axis of the gripper.

Overall, this arrangement of the gripper, and in particular the configuration and positioning of the valves and sensors adjacent to the pneumatic chambers, means that the measurement of the pressure in the chambers and the line pressure is very precise, making the response of the device very precise as well.

The presence of an encoder, which reads the position/rotation of the synchronization pinion, enables accurate position control.

The result is a pneumatic gripper that is more compact and lighter than grippers according to the state of the art, which further includes a proportional control of pressure, and thus also of force, and a position control which are very fine in terms of precision and response speed.

Due to the fact that all the devices that implement the command, regulation, and control functions are incorporated into the gripper, the pneumatic and electrical connections of the gripper to external devices are minimized.

A person skilled in the art may make several changes, adjustments and replacements of elements with others that are functionally equivalent to the embodiments of the pneumatic gripper according to the invention in order to meet incidental needs, without departing from the scope of the following claims. Each of the features described as belonging to a possible embodiment may be obtained independently of the other described embodiments.

## Claims

1. A pneumatic gripper, comprising a shell (10) which forms an internal gripper compartment (12) wherein a pneumatic actuation group (14) and an electronic board (16) for commanding and controlling the pneumatic actuation group are housed, two gripping jaws (2) commanded by the pneumatic actuation group so as to be translatable along a jaw translation axis (X) between a jaw opening position and a jaw closing position, wherein the pneumatic actuation group comprises:
- an internal body (18) wherein two pneumatic chambers (26, 26a) are obtained, which extend along respective chamber axes (Y) parallel to each other and to the jaw translation axis (X), a jaw actuation piston (28, 28a) being slidably housed in each pneumatic chamber, each pneumatic chamber being divided by the respective piston into a jaw closing chamber (26', 26a') and a jaw opening chamber (26", 26a"), each jaw being rigidly connected to a respective actuation piston;
- cartridge solenoid valves (20, 20a) housed in respective valve seats (22) obtained in the internal body (18) and suitable to control the passage of air from an inlet port (30a) to the jaw closing and opening chambers and from the jaw closing and opening chambers to one or more discharge ports;
- a transducer shaft (24) which extends with possibility of axial rotation along a shaft axis (W) perpendicular to the chamber axes (Y) in a shaft seat obtained in the internal body (18), the transducer shaft (24) being operatively connected to the jaw actuation pistons (28, 28a) so as to be rotationally actuated by the translation of the jaw actuation pistons;
and wherein the electronic board (16) for commanding and controlling the pneumatic actuation group is provided with:
- electrical connection means suitable to create an electrical connection with the cartridge solenoid valves (20, 20a);
- a position sensor (36) operatively coupled to the transducer shaft;
- at least two chamber pressure sensors (40) suitable to measure the air pressure in the jaw closing and jaw opening chambers, respectively.

2. A pneumatic gripper according to claim 1, wherein the internal body (18) extends between a distal end, from which the jaws extend, and a proximal end from which electrical solenoid valve contacts (42) extending from the solenoid valves protrude, and wherein the electronic board (16) supports electrical board connectors (44) which electrically couple to the electrical solenoid valve contacts (42).

3. A pneumatic gripper according to claim 1 or 2, wherein the electronic command and control board (16) is supported by the internal body (18).

4. A pneumatic gripper according to any one of the preceding claims, wherein the transducer shaft (24) supports a magnetic element (24a) at the end thereof facing the electronic command and control board (16), and wherein the position sensor (36) is an encoder magnetically coupled to the magnetic element (24a).

5. A pneumatic gripper according to any one of the preceding claims, wherein each actuation piston (28, 28a) is provided, on one side thereof facing the other piston, with a rack portion (28', 28a'), the racks being coupled to a central synchronization pinion (24b) supported by the transducer shaft (24).

6. A gripper according to any one of the preceding claims, comprising a processing unit (50) operatively connected to the cartridge solenoid valves (20, 20a) and to the chamber pressure sensors (40), the processing unit being programmed to command the solenoid valves so as to carry out a proportional control of the pressure in the jaw closing and opening chambers, as a function of the pressure values detected by the chamber pressure sensors.

7. A gripper according to claim 6, comprising sensor means suitable to provide the processing unit (50) with signals indicative of the gripping force applied by the jaws to the item, the processing unit being programmed to implement a gripping force control algorithm based on such signals from the sensor means.

8. A gripper according to claim 6 or 7, wherein the cartridge solenoid valves (20, 20a) are of the on/off type, and wherein the processing unit is programmed to command the solenoid valves by means of a PWM modulation.

9. A gripper according to any one of the preceding claims, comprising four identical cartridge solenoid valves (20, 20a) of the two-way, two-position type, two supply solenoid valves (20) being used to control the passage of air from the inlet port (30a) towards respective jaw closing and opening chambers, two discharge solenoid valves (20a) being used to control the passage of air from the respective jaw closing and jaw opening chambers towards the discharge port.

10. A gripper according to any one of the preceding claims, wherein, a supply pressure sensor (38) is further mounted to the command and control board (16) in fluid communication with the inlet port (30a) to measure the pressure of the air entering the gripper.

11. A gripper according to any one of claims 6-10, wherein the position sensor (36) is operatively connected to the processing unit (50), the processing unit being programmed to implement an algorithm for controlling the position of the jaws based on signals from the position sensor (36).

12. A gripper according to any one of claims 6-11, wherein the processing unit is mounted to the electronic command and control board.

## Patentansprüche

1. Pneumatischer Greifer, umfassend eine Umhüllung (10), die einen Greiferinnenraum (12) bildet, in dem eine pneumatische Betätigungsgruppe (14) und eine Elektronikplatine (16) zum Anweisen und Steuern bzw. Regeln der pneumatischen Betätigungsgruppe untergebracht sind, zwei Greifbacken (2), die von der pneumatischen Betätigungsgruppe dahingehend angewiesen werden, entlang einer Backenverschiebungsachse (X) zwischen einer Backenöffnungsposition und einer Backenschließposition verschiebbar zu sein, wobei die pneumatische Betätigungsgruppe umfasst:
- einen Innenkörper (18), in dem zwei pneumatische Kammern (26, 26a) erhalten bzw. gebildet sind, die sich entlang jeweiliger Kammerachsen (Y) parallel zueinander und zu der Backenverschiebungsachse (X) erstrecken, wobei in jeder pneumatischen Kammer ein Backenbetätigungskolben (28, 28a) verschiebbar untergebracht ist, wobei jede pneumatische Kammer durch den jeweiligen Kolben in eine Backenschließkammer (26', 26a') und eine Backenöffnungskammer (26", 26a") unterteilt ist, wobei jede Backe starr mit einem jeweiligen Betätigungskolben verbunden ist;
- Patronenmagnetventile (20, 20a), die in jeweiligen Ventilsitzen (22) untergebracht sind, die in dem Innenkörper (18) erhalten bzw. gebildet sind und geeignet sind, den Durchtritt von Luft von einer Einlassöffnung bzw. einem Einlassanschluss (30a) zu den Backenschließ- und - öffnungskammern sowie von den Backenschließ- und -öffnungskammern zu einer oder mehreren Auslassöffnungen bzw. Auslassanschlüssen zu steuern bzw. zu regeln;
- eine Wandlerwelle (24), die sich mit Möglichkeit einer axialen Drehung entlang einer Wellenachse (W) senkrecht zu den Kammerachsen (Y) in einem Wellensitz erstreckt, der in dem Innenkörper (18) erhalten bzw. gebildet ist, wobei die Wandlerwelle (24) operativ mit den Backenbetätigungskolben (28, 28a) verbunden ist, um durch die Verschiebung der Backenbetätigungskolben rotierend betätigt zu werden;
und wobei die Elektronikplatine (16) zum Anweisen und Steuern bzw. Regeln der pneumatischen Betätigungsgruppe versehen ist mit:
- elektrischen Verbindungsmitteln, die geeignet sind, eine elektrische Verbindung mit den Patronenmagnetventilen (20, 20a) herzustellen;
- einem Positionssensor (36), der operativ mit der Wandlerwelle gekoppelt ist;
- zumindest zwei Kammerdrucksensoren (40), die geeignet sind, den Luftdruck in den Backenschließ- bzw. Backenöffnungskammern zu messen.

2. Pneumatischer Greifer nach Anspruch 1, wobei sich der Innenkörper (18) zwischen einem distalen Ende, von dem sich die Backen erstrecken, und einem proximalen Ende erstreckt, von dem elektrische Magnetventilkontakte (42) vorstehen, die sich von den Magnetventilen erstrecken, und wobei die Elektronikplatine (16) elektrische Platinenverbinder (44) stützt bzw. trägt, die elektrisch mit den elektrischen Magnetventilkontakten (42) koppeln.

3. Pneumatischer Greifer nach Anspruch 1 oder 2, wobei die elektronische Anweisungs- und Steuer- bzw. Regelplatine (16) durch den Innenkörper (18) gestützt bzw. getragen ist.

4. Pneumatischer Greifer nach einem der vorhergehenden Ansprüche, wobei die Wandlerwelle (24) an dem Ende davon, das der elektronischen Anweisungs- und Steuer- bzw. Regelplatine (16) zugewandt ist, ein Magnetelement (24a) stützt bzw. trägt, und wobei der Positionssensor (36) ein Encoder ist, der magnetisch mit dem Magnetelement (24a) gekoppelt ist.

5. Pneumatischer Greifer nach einem der vorhergehenden Ansprüche, wobei jeder Betätigungskolben (28, 28a) auf einer Seite davon, die dem anderen Kolben zugewandt ist, mit einem Zahnstangenabschnitt (28', 28a') versehen ist, wobei die Zahnstangen mit einem zentralen Synchronisationsritzel (24b) gekoppelt sind, das durch die Wandlerwelle (24) gestützt bzw. getragen ist.

6. Greifer nach einem der vorhergehenden Ansprüche, umfassend eine Verarbeitungseinheit (50), die operativ mit den Patronenmagnetventilen (20, 20a) und den Kammerdrucksensoren (40) verbunden ist, wobei die Verarbeitungseinheit dahingehend programmiert ist, die Magnetventile so anzuweisen, dass sie eine proportionale Steuerung bzw. Regelung des Drucks in den Backenschließ- und -öffnungskammern in Abhängigkeit von den Druckwerten durchführen, die durch die Kammerdrucksensoren detektiert werden.

7. Greifer nach Anspruch 6, umfassend Sensormittel, die geeignet sind, der Verarbeitungseinheit (50) Signale bereitzustellen, welche die durch die Backen auf den Gegenstand ausgeübte Greifkraft angeben, wobei die Verarbeitungseinheit programmiert ist, einen Greifkraftsteuer- bzw. - regelalgorithmus basierend auf solchen Signalen von den Sensormitteln zu implementieren.

8. Greifer nach Anspruch 6 oder 7, wobei die Patronenmagnetventile (20, 20a) vom Typ "Ein/Aus" sind und wobei die Verarbeitungseinheit programmiert ist, die Magnetventile mittels einer PWM-Modulation anzuweisen.

9. Greifer nach einem der vorhergehenden Ansprüche, umfassend vier identische Patronenmagnetventile (20, 20a) vom Zweiwege-Zweipositionen-Typ, wobei zwei Versorgungsmagnetventile (20) verwendet werden, um den Durchtritt von Luft von der Einlassöffnung (30a) zu den jeweiligen Backenschließ- und - öffnungskammern zu steuern bzw. zu regeln, wobei zwei Auslassmagnetventile (20a) verwendet werden, um den Durchtritt von Luft von den jeweiligen Backenschließ- und -öffnungskammern zu der Auslassöffnung zu steuern bzw. zu regeln.

10. Greifer nach einem der vorhergehenden Ansprüche, wobei ein Versorgungsdrucksensor (38) ferner an der Anweisungs- und Steuer- bzw. Regelplatine (16) in Fluidverbindung mit der Einlassöffnung (30a) montiert ist, um den Druck der in den Greifer eintretenden Luft zu messen.

11. Greifer nach einem der Ansprüche 6-10, wobei der Positionssensor (36) operativ mit der Verarbeitungseinheit (50) verbunden ist, wobei die Verarbeitungseinheit dahingehend programmiert ist, einen Algorithmus zum Steuern bzw. Regeln der Position der Backen basierend auf Signalen von dem Positionssensor (36) zu implementieren.

12. Greifer nach einem der Ansprüche 6-11, wobei die Verarbeitungseinheit an der elektronischen Anweisungs- und Steuer- bzw. Regelplatine montiert ist.

## Revendications

1. Pince pneumatique comprenant une coque (10) qui forme un compartiment intérieur de pince (12) dans lequel un groupe d'actionnement pneumatique (14) et une carte électronique (16) pour commander et contrôler le groupe d'actionnement pneumatique sont logés, deux mâchoires de pince (2) commandées par le groupe d'actionnement pneumatique de façon à être transportables le long d'un axe de translation de mâchoire (X) entre une position d'ouverture de mâchoire et une position de fermeture de mâchoire, dans laquelle le groupe d'actionnement pneumatique comprend :
- un corps intérieur (18) dans lequel deux chambres pneumatiques (26, 26a) sont obtenues qui s'étendent le long d'axes de chambre (Y) respectifs parallèles l'un à l'autre et à l'axe de translation de mâchoire (X), un piston d'actionnement de mâchoire (28, 28a) étant logé coulissant dans chaque chambre pneumatique, chaque chambre pneumatique étant divisée par le piston respectif en une chambre de fermeture de mâchoire (26', 26a') et une chambre d'ouverture de mâchoire (26", 26a"), chaque mâchoire étant rigidement reliée à un piston d'actionnement respectif ;
- des électrovannes de cartouche (20, 20a) logées dans des sièges de vanne (22) obtenus dans le corps intérieur (18) et adaptées pour commander le passage d'air d'un port d'entrée (30a) aux chambres de fermeture et d'ouverture de mâchoire et des chambres de fermeture et d'ouverture de mâchoire à un ou plusieurs ports de décharge ;
- un arbre de transducteur (24) qui s'étend avec la possibilité de rotation axiale le long d'un axe d'arbre (W) perpendiculaire aux axes de chambres (Y) dans un siège d'arbre obtenu dans le corps intérieur (18), l'arbre de transducteur (24) étant fonctionnellement relié aux pistons d'actionnement de mâchoire (28, 28a) afin d'être actionné de façon rotative par la translation des pistons d'actionnement de mâchoire ;
et dans laquelle la carte électronique (16) pour commander et contrôler le groupe d'actionnement pneumatique est pourvue de :
- moyens de connexion électriques adaptés pour créer une connexion électrique avec les électrovannes de cartouche (20, 20a) ;
- un capteur de position (36) fonctionnellement relié à l'arbre de transducteur ;
- au moins deux capteurs de pression de chambre (40) adaptés pour mesurer la pression d'air respectivement dans les chambres de fermeture de mâchoire et d'ouverture de mâchoire.

2. Pince pneumatique selon la revendication 1, dans laquelle le corps intérieur (18) s'étend entre une extrémité distale à partir de laquelle les mâchoires s'étendent, et une extrémité proximale à partir de laquelle des contacts d'électrovanne (42) s'étendent, et dans laquelle la carte électronique (16) porte des connecteurs de carte électronique (44) qui relient électriquement aux contacts d'électrovanne (42).

3. Pince pneumatique selon la revendication 1 ou 2, dans laquelle la carte électronique de commande et de contrôle (16) est portée par le corps intérieur (18).

4. Pince pneumatique selon l'une des revendications précédentes, dans laquelle l'arbre de transducteur (24) porte un élément magnétique (24a) à son extrémité en regard de la carte électronique de commande et de contrôle (16) et dans laquelle le capteur de position (36) est un encodeur magnétiquement relié à l'élément magnétique (24a).

5. Pince pneumatique selon l'une des revendications précédentes, dans laquelle chaque piston d'actionnement (28, 28a) est pourvu, sur un côté de celui-ci en regard de l'autre piston, d'une partie de châssis (28', 28a'), les châssis étant attachés à un pignon central de synchronisation (24b) porté par l'arbre de transducteur (24).

6. Pince pneumatique selon l'une des revendications précédentes, comprenant une unité de traitement (50) fonctionnellement reliée aux électrovannes de cartouche (20, 20a) et aux capteurs de pression de chambre (40), l'unité de traitement étant programmée pour commander les électrovannes de façon à effectuer une commande proportionnelle de la pression dans les chambres de fermeture et d'ouverture de mâchoire en fonction des valeurs de pression détectées par les capteurs de pression de chambre.

7. Pince pneumatique selon la revendication 6, comprenant des moyens formant capteur adaptés pour fournir à l'unité de traitement (50) des signaux indicatifs de la force de pince appliquée à l'objet par les mâchoires, l'unité de traitement étant programmée pour mettre en œuvre un algorithme de commande de la force de pincement sur la base de tels signaux des moyens formant capteur.

8. Pince pneumatique selon la revendication 6 ou 7, dans laquelle les électrovannes de cartouche (20, 20a) sont de type marche/arrêt et dans laquelle l'unité de traitement est programmée pour commander les électrovannes moyennant une modulation PWM.

9. Pince pneumatique selon l'une des revendications précédentes, comprenant quatre électrovannes de cartouche (20, 20a) identiques de type bidirectionnel, deux positions, deux électrovannes (20) étant utilisées pour commander le passage d'air du port d'entrée (30a) vers des chambres de fermeture et ouverture de mâchoire respectives, deux électrovannes (20a) étant utilisées pour commander le passage d'air des chambres de fermeture et ouverture de mâchoire respectives vers le port de sortie.

10. Pince pneumatique selon l'une des revendications précédentes, dans laquelle un capteur de pression d'alimentation (38) est monté en outre sur la carte de commande et de contrôle (16) en communication fluidique avec le port d'entrée (30a) pour mesurer la pression d'air de l'air entrant dans la pince.

11. Pince pneumatique selon l'une des revendications 6 à 10, dans laquelle le capteur de position (36) est fonctionnellement relié à l'unité de traitement (50), l'unité de traitement étant programmée pour mettre en œuvre un algorithme pour commander la position des mâchoires sur la base de signaux provenant du capteur de position (36).

12. Pince pneumatique selon l'une des revendications 6 à 11, dans laquelle l'unité de traitement est montée sur la carte électronique de commande et de contrôle.
